# EUROPEAN PATENT APPLICATION

(11) **EP 3 384 976 A1**
(43) Date of publication of application: **10.10.2018**
(21) Application number: 16870358.5
(22) Date of filing: 31.10.2016
(51) Int. Cl.: B01D 53/68, B01D 53/14, B01D 53/78

(54) **METHOD FOR TREATING EXHAUST GAS CONTAINING ELEMENTAL FLUORINE**

(30) Priority: 01.12.2015 JP 2015234588
(71) Applicant: Showa Denko K.K., Tokyo 105-8518 (JP)
(72) Inventor: MURAKAWA, Minako, Tokyo 105-8518 (JP); SANO, Tomomi, Tokyo 105-8518 (JP); TODA, Asako, Tokyo 105-8518 (JP)
(74) Representative: Strehl Schübel-Hopf & Partner
(86) International application number: PCT/JP2016/082240
(87) International publication number: WO 2017/094418

(57) **Abstract**

A method for treating a fluorine element-containing exhaust gas of the present invention is characterized by including a dilution step of diluting a fluorine element-containing exhaust gas (a) with an inert gas so as to have a fluorine gas (F₂) concentration of 25% by volume or less to prepare a diluted gas (b) and a water absorption step of contacting the diluted gas (b) with water to obtain a treated gas (c). According to the method of the invention, there can be provided a method that, when treating a fluorine element-containing exhaust gas by a wet type method, effectively suppresses the occurrence of a side reaction that produces oxygen difluoride from fluorine gas to economically and efficiently treat the fluorine element-containing exhaust gas. Additionally, in the invention, effectively suppressing the production of oxygen difluoride in the treatment step enables significant improvement of the effect of an additional treatment by a chemical solution and suppression of the amount of chemical solution consumption when performing the treatment.

## Description

### TECHNICAL FIELD

The present invention relates to a method for treating a fluorine element-containing exhaust gas to obtain a treated gas containing reduced amounts of fluorine gas and fluorine compounds.

### BACKGROUND ART

Fluorine compounds are used in large amounts in a variety of fields, for purposes such as manufacturing of semiconductors, liquid crystals, and the like, raw materials of chemical products and polymer materials, or surface modifications.

Particularly, in manufacturing processes for semiconductor, liquid crystal, and the like, fluorine-based gases such as F₂, NF₃, SiF₄, COF₂, SF₆, and fluorocarbons (such as CF₄, C₂F₆, and C₄F₆) have been conventionally used as gases for etching and cleaning. In processes using fluorine-based gases, gases derived from the used fluorine-based gases or fluorine element-containing gases produced by reaction are discharged as exhaust gases. Additionally, in manufacturing a fluorine gas or a fluorine compound, a gas containing an extremely highly concentrated fluorine element is sometimes discharged as an exhaust gas.

These exhaust gases include highly toxic fluorine-based gases, such as oxidizing gases including fluorine gas and acidic gases including hydrogen fluoride, in high concentration, and therefore, it is necessary to sufficiently remove such toxic gases from the exhausted gases.

As a method for removing toxic gases such as fluorine gas and hydrogen fluoride from an exhaust gas, there is a conventional dry type process that removes them by filling a solid treatment agent such as calcium carbonate, calcium hydroxide, or active alumina in a fixed phase, but there is a problem in that running cost is high.

As a wet type process, a wet type scrubber using water or an alkaline aqueous solution such as sodium hydroxide is excellent as a method for treating a large amount of gas at low cost, but is known by by-producing more highly toxic oxygen difluoride (OF₂). Oxygen difluoride has an ACGIH allowable concentration (TLV) of 0.05 ppm, which indicates extremely high toxicity, and there has been a problem where oxygen difluoride once generated cannot easily be removed by water or an alkaline aqueous solution, and is discharged from exhaust gas.

As methods for solving the problem in such a wet process, Patent Document 1 discloses a method using a mixed liquid of alkali sulfite and caustic alkali as an absorbing liquid, Patent Document 2 discloses a method using an absorbing liquid that includes a mixture of a basic compound such as sodium hydroxide and a sulfur-based reducing agent such as sodium thiosulfate, and Patent Document 3 discloses a method using a liquid that includes a base such as an alkali metal hydroxide and a thiosulfate or a nitrous acid alkali metal salt.

In addition, in Patent Document 4, it is disclosed that an oxidizing gas such as chlorine gas or fluorine gas is removed from an exhaust gas by performing a wet type process in a packed column filled with sulfite poorly soluble in water, without using any compound containing sodium ions and the like.

Although these methods are effective in suppressing discharge of oxygen difluoride, concentrations of the alkalis or the reducing agents need to be maintained at high level in order to continuously treat an exhaust gas containing a fluorine element-containing gas in high concentration to obtain a sufficient effect. Due to this, there have been problems where troubles such as clogging easily occur, which increases chemical solution cost, as well as there are needs for waste liquid treatments of the alkalis, the reducing agents, and various kinds of reaction products in discharged liquids.

Thus, there has been a desire for emergence of a method for treating a fluorine element-containing exhaust gas that enables production and discharge of oxygen difluoride to be suppressed in an easy and economical manner.

Additionally, Patent Document 5 discloses a method in which an exhaust gas is reacted with steam under heating to be decomposed into hydrogen fluoride and oxygen. In this method, however, the reaction is performed at a high temperature of from 300 to 400°C, and thus there is a large influence of corrosion due to a high-temperature hydrogen fluoride gas and the like, which limits reactor material, so that it has been difficult to industrially employ the method.

### RELATED ART DOCUMENTS

### Patent Documents

Patent Document 1: JP H02-233122 A
Patent Document 2: JP 2006-231105 A
Patent Document 3: JP 2013-539717 A
Patent Document 4: JP 2000-176243 A
Patent Document 5: JP 2006-289238 A

### SUMMARY OF INVENTION

### Technical Problem

It is an object of the present invention to provide a method for treating a fluorine element-containing exhaust gas to obtain a treated gas containing reduced amounts of fluorine-based gases, which method effectively suppresses occurrence of a side reaction that produces oxygen difluoride, and economically and efficiently treats the fluorine element-containing exhaust gas.

### Solution to Problem

The present invention relates to the following items [1] to [8]:
[1] A method for treating a fluorine element-containing exhaust gas, characterized by including a dilution step of diluting a fluorine element-containing exhaust gas (a) with an inert gas so as to have a fluorine gas (F₂) concentration of 25% by volume or less to prepare a diluted gas (b) and a water absorption step of contacting the diluted gas (b) with water to obtain a treated gas (c).
[2] The method for treating a fluorine element-containing exhaust gas according to the [1], in which the inert gas is air or nitrogen gas.
[3] The method for treating a fluorine element-containing exhaust gas according to the [1] or the [2], in which the exhaust gas (a) includes fluorine gas and/or hydrogen fluoride.
[4] The method for treating a fluorine element-containing exhaust gas according to any of the [1] to the [3], in which an oxygen difluoride concentration in the treated gas (c) is 100 ppm by volume or less.
[5] The method for treating a fluorine element-containing exhaust gas according to any of the [1] to the [4], further including a chemical solution absorption step of contacting the treated gas (c) with an aqueous solution including a reducing agent to obtain a treated gas (d).
[6] The method for treating a fluorine element-containing exhaust gas according to the [5], in which the reducing agent included in the aqueous solution including a reducing agent is a sulfur-based reducing agent.
[7] The method for treating a fluorine element-containing exhaust gas according to the [6], in which the sulfur-based reducing agent is sulfite or thiosulfate.
[8] The method for treating a fluorine element-containing exhaust gas according to any of the [5] to [7], in which an oxygen difluoride concentration in the treated gas (d) is 1 ppm by volume or less.

### Advantageous Effects of Invention

According to the method of the present invention, there can be provided a method that, when treating a fluorine element-containing exhaust gas by a wet type method, effectively suppresses occurrence of a side reaction that produces oxygen difluoride, and thereby economically and efficiently treats the fluorine element-containing exhaust gas.

Additionally, in the present invention, effectively suppressing the production of oxygen difluoride in the treatment step can significantly improve the treatment effect of a chemical solution absorption step as an additional treatment by a chemical solution, and can suppress the amount of chemical solution consumption when performing the chemical solution absorption step.

### BRIEF DESCRIPTION OF DRAWING

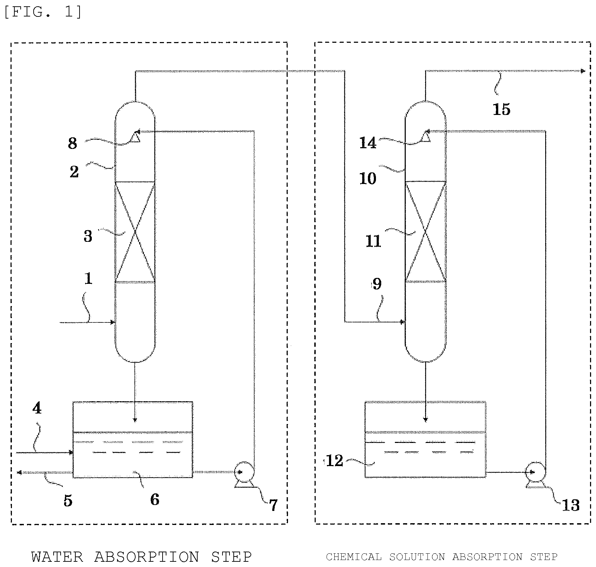

FIG. 1 depicts a schematic diagram of an example of an apparatus for performing a method for treating a fluorine element-containing exhaust gas according to the present invention.

### DESCRIPTION OF EMBODIMENTS

Hereinafter, the present invention will be specifically described.

When a fluorine element-containing exhaust gas contacts with water, for example, fluorine gas (F₂) and the water rapidly react with each other to produce hydrogen fluoride and oxygen, as in Reaction Formula (1).

F₂ + H₂O → HF + 1/2O₂ ... (1)

Then, the produced hydrogen fluoride (HF) is highly dissolved in the water and easily absorbed in the water.

In the contact between fluorine gas and water, reactivity of the fluorine gas is high, and therefore, it is known that other than the main reaction of Reaction Formula (1) mentioned above, there occurs a side reaction that produces ozone (O₃) and oxygen difluoride (OF₂)depending on conditions. However, the present inventor found that when a fluorine concentration in an exhaust gas when contacting the exhaust gas with water is set to 25% by volume or less, the side reaction is suppressed, so that ozone (O₃) is hardly produced, and production of oxygen difluoride (OF₂) is also suppressed to low level, and thereby completed the invention.

A method for treating a fluorine element-containing exhaust gas according to the present invention includes a dilution step of diluting a fluorine element-containing exhaust gas (a) to prepare a diluted gas (b) and a water absorption step of contacting the diluted gas (b) with water to obtain a treated gas (c). Additionally, the method for treating a fluorine element-containing exhaust gas of the invention preferably further includes a chemical solution absorption step of contacting the treated gas (c) with an aqueous solution including a reducing agent to obtain a treated gas (d).

### <Fluorine Element-Containing Exhaust Gas (a)>

A target to be treated by the method for treating a fluorine element-containing exhaust gas of the present invention is the fluorine element-containing exhaust gas (a) (hereinafter may be referred to simply as exhaust gas (a)). Examples of the fluorine element-containing exhaust gas (a) include gases containing fluorine-based gases such as F₂, NF₃, SiF₄, COF₂, SF₆, and fluorocarbons (such as CF₄, C₂F₆, and C₄F₆), and for example, there may be mentioned fluorine gas (F₂)-containing exhaust gases. In the invention, as the exhaust gas (a), any of fluorine element-containing exhaust gases such as industrial exhaust gases produced in processes using fluorine-based gases or processes involving occurrences of fluorine-based gases can be treated without any particular limitation. The exhaust gas (a) to be treated by the invention may include, besides fluorine gas as an oxidizing gas, an oxidizing gas such as oxygen difluoride (OF₂) and/or an acidic gas such as hydrogen fluoride (HF). Preferably, the exhaust gas (a) includes fluorine gas and/or hydrogen fluoride. However, when the exhaust gas (a) contains oxygen difluoride, the method for treating a fluorine element-containing exhaust gas preferably includes the chemical solution absorption step.

The exhaust gas (a) according to the present invention is not particularly limited. However, since the treatment method of the invention includes the dilution step, the exhaust gas (a) is desirably an exhaust gas that contains fluorine gas in high concentration where a fluorine gas (F₂) concentration in the exhaust gas (a) is usually 25% by volume or more, preferably 30% by volume or more, more preferably 35% by volume or more, and still more preferably 40% by volume or more. An upper limit value of the fluorine gas concentration in the exhaust gas (a) is not particularly limited, and even 100% fluorine gas is applicable. Additionally, when the fluorine gas concentration in the exhaust gas (a) is initially 25% by volume or less, the exhaust gas (a) is regarded as having been subjected to the dilution step of the invention, and can be directly subjected to the water absorption step.

### <Dilution Step>

At the dilution step, the fluorine element-containing exhaust gas (a) as the target to be treated is diluted with an inert gas, diluted so as to have a desired fluorine concentration of 25% by volume or less to prepare the diluted gas (b). When the exhaust gas (a) initially satisfies 25% by volume or less, the exhaust gas (a) may be regarded as having been subjected to the dilution step, and may be used as the diluted gas (b) to be subjected to the water absorption step that will be described later.

In the present invention, inert gas means a gas that, under treatment conditions, substantially does not react with components in the exhaust gas (a), water, and an aqueous solution including a reducing agent to be used at the chemical solution absorption step that is performed as needed, and does not hinder reactions, and examples thereof include air, nitrogen and rare gases. In the invention, it is preferable to use air as the inert gas, since it is easy and economical.

At the dilution step, the exhaust gas (a) is diluted with an inert gas such as air so that a fluorine gas (F₂) concentration in the diluted gas (b) to be obtained is 25% by volume or less. The fluorine gas concentration in the diluted gas (b) is 25% by volume or less, preferably from 0.1 to 25% by volume, and more preferably from 0.1 to 5% by volume. When the fluorine gas concentration in the diluted gas (b) is 25% by volume or less, fluorine gas (F₂) in the diluted gas (b) can be sufficiently removed at the water absorption step, and production of ozone (O₃) and oxygen difluoride (OF₂) can be suitably suppressed. When the fluorine gas concentration in the diluted gas (b) exceeds 25% by volume, it is not preferable since a side reaction that produces oxygen difluoride easily occurs at the water absorption step where the diluted gas (b) is contacted with water. Additionally, when the fluorine gas concentration in the diluted gas (b) is less than 0.1% by volume, the amount of the diluted gas (b) to be subjected to the water absorption step is increased, and thereby a large treatment apparatus and a long treatment time may be needed, which is not economical.

### <Water Absorption Step>

At the water absorption step, the diluted gas (b) is contacted with water to obtain the treated gas (c).

As a specific method and apparatus for performing the water absorption step of contacting the diluted gas (b) with water, any conventionally known method for contacting gas with liquid can be employed without any particular limitation. Preferably employable are methods using in-liquid dispersion type apparatuses such as a ventilating/stirring tank or apparatuses such as an absorption column in which gas and liquid are contacted to allow at least a part of a gas component to be absorbed by a liquid component. Specifically, preferably employable are methods using in-liquid dispersion type apparatuses such as a stirring tank or apparatuses such as a spraying column, a plate column, a packed column, and a known absorption column equipped with a jet scrubber or the like. For example, the water absorption step of the invention can be performed using a ventilating/stirring tank, as employed in Examples that will be described later, or industrially, can be performed using an apparatus on the water absorption step side in the schematic diagram depicted in FIG. 1, or the like. Such methods can be similarly employed also at the chemical solution absorption step that is performed as a post-step, as needed.

At the water absorption step, the water that comes in contact with the diluted gas (b) can be used in a circulating manner. However, the concentration of the absorbed hydrogen fluoride increases as the exhaust gas is treated, and it is thus preferable to exchange the water as an absorbing liquid in a case where the exhaust gas is treated in large amount or continuously. Although the water as the absorbing liquid may be exchanged in a batch or continuous manner, the concentration of the HF in the absorbing liquid is preferably maintained constant, and the water is preferably continuously exchanged.

The diluted gas (b) includes fluorine gas (F₂) having a concentration of 25% by volume or less, and when the fluorine contacts with water, it rapidly reacts to produce hydrogen fluoride (HF), as represented by Formula (1) mentioned above, and the produced hydrogen fluoride is dissolved in water. In general, in the contact between fluorine gas and water, a side reaction that produces oxygen difluoride (OF₂) occurs along with a reaction that produces hydrogen fluoride. However, in the present application, fluorine gas (F₂) in the diluted gas (b) is controlled to 25% by volume or less, thereby significantly suppressing the side reaction that produces oxygen difluoride. This allows a large part of a fluorine element content derived from the fluorine gas (F₂) in the diluted gas (b) to be transferred to the water side at the water absorption step. Additionally, even when hydrogen fluoride is included in the diluted gas (b), it is dissolved in water at the water absorption step, and a large part thereof is transferred to the water side.

Accordingly, the treated gas (C) obtained at the water absorption step is one in which the large part of the fluorine gas included in the diluted gas (b) has been absorbed into the water side and removed. The treated gas (c) may include entrained fluorine gas and/or hydrogen fluoride.

In the treated gas (c) as a gas discharged from such a water absorption step, the fluorine gas concentration is sufficiently reduced, and increase of the oxygen difluoride concentration is suitably suppressed. The oxygen difluoride concentration in the treated gas (c) obtained at the water absorption step is preferably 100 ppm by volume or less when the initially introduced exhaust gas (a) substantially does not include oxygen difluoride.

When the fluorine-based gas (fluorine gas or a fluorine compound gas) concentration in the treated gas (c) is sufficiently low and within a range suitable to discharge standards, the treated gas (c) may be discharged as it is. In addition, when further reduction of the fluorine-based gas concentration in the treated gas (c) is desired, the treated gas (c) is preferably subjected to the chemical solution absorption step that will be described.

### <Chemical Solution Absorption Step>

The treated gas (C) obtained at the water absorption step described above is preferably subjected to the chemical solution absorption step, as needed.

At the chemical solution absorption step, the treated gas (c) is contacted with an aqueous solution including a reducing agent to transfer fluorine-based gas elements to the chemical solution side, whereby there can be obtained the treated gas (d) containing further reduced amounts of the fluorine-based gas elements.

The treated gas (c) usually includes oxygen difluoride either included in the exhaust gas (a) or produced at the water absorption step and entrained hydrogen fluoride. The treated gas (c) may include entrained fluorine gas and/or hydrogen fluoride.

The concentration of oxygen difluoride in the treated gas (c) is not particularly limited, but is preferably 100 ppm by volume or less. In the present invention, since the fluorine concentration in the diluted gas (b) is 25% by volume or less, the oxygen difluoride concentration in the treated gas (c) obtained at the water absorption step can be made sufficiently low, and can usually be 100 ppm by volume or less when the initial exhaust gas (a) does not include OF₂. When the oxygen difluoride concentration in the treated gas (c) is high, the treated gas (c) may be introduced into the chemical solution absorption step after being diluted as appropriate with an inert gas.

At the chemical solution absorption step, the oxygen difluoride in the treated gas (c) reacts with the reducing agent to become hydrogen fluoride, and the hydrogen fluoride in the treated gas (c) and the hydrogen fluoride produced by the reaction are removed by reacting with a base.

The aqueous solution including a reducing agent that is a chemical solution to be used at the chemical solution absorption step is an aqueous solution including a reducing agent dissolved in water, and is used as an absorbing liquid. The aqueous solution including a reducing agent may include a base, together with a reducing agent.

As the reducing agent, any reducing agent that can reduce oxygen difluoride can be used without any particular limitation, and can be selected from, for example, thiosulfates such as sodium thiosulfate, ammonium thiosulfate, and potassium thiosulfate; sulfites such as sodium sulfite, potassium sulfite, and ammonium sulfite; chlorides such as potassium chloride and sodium chloride; bromides such as potassium bromide; iodides such as potassium iodide; nitrites such as sodium nitrite and potassium nitrite; formates such as formic acid, sodium formate, and potassium formate; oxalic acid, hydrazine, and the like. In the present invention, as the reducing agent, preferably used are sulfur-based reducing agents, and more preferably used are thiosulfates and sulfites, from the viewpoint of efficiently removing oxygen difluoride.

The concentration of the reducing agent is preferably from 1 to 20% by mass, and more preferably from 1 to 10% by mass in the aqueous solution including a reducing agent, although it depends on conditions such as the oxygen difluoride concentration in the treated gas (c).

When the aqueous solution including a reducing agent includes a base, any base that can remove hydrogen fluoride and the like can be used without any particular limitation, but metal hydroxides are preferably used, and sodium hydroxide or potassium hydroxide is more preferably used.

When using a base, the concentration of the base depends on conditions such as the hydrogen fluoride concentration in the treated gas (c), but liquid properties of the aqueous solution including a reducing agent are preferably maintained to be alkaline, and the pH thereof is preferably 8 or more, and more preferably 9 or more.

At the chemical solution absorption step, as a method for contacting the treated gas (c) obtained at the water absorption step with the aqueous solution including a reducing agent, any conventionally known method for contacting gas with liquid can be employed without any particular limitation, similarly to the water absorption step. Preferably employable are methods using in-liquid dispersion type apparatuses such as a ventilating/stirring tank or apparatuses such as an absorption column in which gas and liquid are contacted to allow at least a part of a gas component to be absorbed by a liquid component. Specifically, preferably employable are methods using in-liquid dispersion type apparatuses such as a stirring tank or apparatuses such as a spraying column, a plate column, a packed column, and a known absorption column equipped with a jet scrubber or the like. For example, the chemical solution absorption step of the present invention can be performed using a ventilating/stirring tank, or industrially, can be performed using an apparatus and the like on the chemical solution absorption step side in the schematic diagram depicted in FIG. 1. For the water absorption step and the chemical solution absorption step, there may be employed either a method using similar apparatuses or a method using different apparatuses.

At the chemical solution absorption step, the aqueous solution including a reducing agent that is used as the absorbing liquid can usually be used by being circulated in the absorption column. In the aqueous solution including a reducing agent, as treatment of the introduced treated gas (c) proceeds, concentrations of the reducing agent and the base decrease, and an absorbed reaction product concentration increases. Thus, when the amount to be treated is large, the aqueous solution including a reducing agent needs to be exchanged. The aqueous solution including a reducing agent may be exchanged in either a batch or continuous manner. However, usually, exchanging in a batch manner is economical, since the concentrations of fluorine-based toxic gases included in the treated gas (c) that is introduced into the chemical solution absorption step are originally low, and a change of a reducing agent concentration in the aqueous solution including a reducing agent is small.

The treated gas (d) discharged from the chemical solution absorption step of the present invention is a gas in which fluorine-based toxic gases such as fluorine gas (F₂), oxygen difluoride (OF₂), and hydrogen fluoride (HF) have been sufficiently removed, so that the treated gas (d) can be a gas that substantially does not include fluorine-based gases. Specifically, the oxygen difluoride concentration in the treated gas (d) is preferably 1 ppm by volume or less, and more preferably 0.5 ppm by volume or less. The fluorine gas (F₂) concentration in the treated gas (d) is preferably 1 ppm by volume or less, and more preferably 0.5 ppm by volume or less. Additionally, the hydrogen fluoride (HF) concentration in the treated gas (d) is preferably 3 ppm by volume or less, and more preferably 1.5 ppm by volume or less.

### EXAMPLES

Hereinafter, the present invention will be described more specifically based on Examples, but is not limited thereto.

### <Measurement of Fluorine-Based Gas Concentrations>

In the following Examples and Comparative Examples, concentrations of respective fluorine-based gas elements were measured and quantified in the following manners.

A combined concentration of fluorine gas (F₂) and oxygen difluoride (OF₂) in a gas was obtained by analyzing by a method in which a specified amount of the gas was absorbed by an aqueous solution of potassium iodide and titrated with sodium thiosulfate (an iodine titration method). Lower quantitation limit was able to be adjusted by increasing the amount of the gas to be absorbed, and the combined concentration of fluorine gas and oxygen difluoride was measured to be 1 ppm by volume or more.

When quantitatively analyzing by separating the fluorine from the oxygen difluoride in the gas, the oxygen difluoride was quantified using FT-IR method (Fourier Transform Infrared Spectroscopy), and an oxygen difluoride concentration was subtracted from the combined concentration of the fluorine and the oxygen difluoride to obtain a fluorine level. When using a long optical path gas cell having an optical path length of 10 m as a gas cell of FT-IR, the lower quantitation limit of the oxygen difluoride concentration is 0.5 ppm by volume.

Hydrogen fluoride concentration was quantified using FT-IR method. The lower quantitation limit of the hydrogen fluoride concentration is 0.5 ppm by volume when a 15 cm gas cell is used.

### [Example 1]

An exhaust gas including 50% by volume of fluorine gas (F₂) (the rest: nitrogen gas) was diluted with air to prepare a diluted gas including 20% by volume of fluorine.

In a gas washing bottle (capacity: 500 ml) made of Teflon (registered trademark) was placed 250 ml of pure water. While stirring with a stirrer, the diluted gas including 20% by volume of fluorine was introduced from a gas introducing pipe at a flow rate of 90 ml/min, and bubbled to perform a water absorption step. The produced gas was collected at an outlet of the gas washing bottle, and used as a treated gas (c-1) to measure the concentrations of fluorine gas (F₂) and oxygen difluoride (OF₂). Table 1 shows measurement results. In the treated gas (c-1), fluorine gas was not detected, and 80 ppm by volume of oxygen difluoride was detected.

### [Example 2]

The exhaust gas dilution and the water absorption step were performed in the same manner as Example 1 to obtain the treated gas (c-1).

Next, in a gas washing bottle (capacity: 500 ml) made of Teflon (registered trademark) containing 250 ml of 3% by mass sodium thiosulfate as an absorbing liquid, the treated gas (c-1) was introduced from a gas introducing pipe at a flow rate of 90 ml/min, and bubbled while stirring with a stirrer to perform a chemical solution absorption step. The produced gas was collected at the outlet of the gas washing bottle, and used as a treated gas (d-1) to measure the concentrations of fluorine gas (F₂) and oxygen difluoride (OF₂). Table 1 shows measurement results. In the treated gas (d-1), neither fluorine gas nor oxygen difluoride was detected.

### [Example 3]

An exhaust gas including 50% by volume of fluorine gas (F₂) (the rest: nitrogen gas) was diluted with air to prepare a diluted gas including 5% by volume of fluorine gas.

The water absorption step was performed in the same manner as Example 1 except for using the diluted gas including 5% by volume of fluorine gas, and the produced gas was collected at the outlet of the gas washing bottle to obtain a treated gas (c-2). Table 1 shows results of measurements of the concentrations of fluorine gas (F₂) and oxygen difluoride (OF₂) in the treated gas (c-2) . In the treated gas (c-2), fluorine gas was not detected, and 6 ppm by volume of oxygen difluoride was detected.

### [Example 4]

The exhaust gas dilution and the water absorption step were performed in the same manner as Example 3 to obtain the treated gas (c-2).

Next, the chemical solution absorption step was performed in the same manner as Example 2 except for using the treated gas (c-2) in place of the treated gas (c-1), and the produced gas was collected at the outlet of the gas washing bottle to obtain a treated gas (d-2). Table 1 shows results of measurements of the concentrations of fluorine gas (F₂) and oxygen difluoride (OF₂) in the treated gas (d-2). In the treated gas (d-2), neither fluorine gas nor oxygen difluoride was detected.

### [Example 5]

An exhaust gas including 50% by volume of fluorine gas (F₂) (the rest: nitrogen gas) was diluted with air to prepare a diluted gas including 1% by volume of fluorine gas.

The water absorption step was performed in the same manner as Example 1 except for using the diluted gas including 1% by volume of fluorine gas, and the produced gas was collected at the outlet of the gas washing bottle to obtain a treated gas (c-3). Table 1 shows results of measurements of the concentrations of fluorine (F₂) and oxygen difluoride (OF₂) in the treated gas (c-3) . In the treated gas (c-3), fluorine gas was not detected, and 2 ppm by volume of oxygen difluoride was detected.

### [Example 6]

The exhaust gas dilution and the water absorption step were performed in the same manner as Example 5 to obtain the treated gas (c-3).

Next, the chemical solution absorption step was performed in the same manner as Example 2 except for using the treated gas (c-3) in place of the treated gas (c-1), and the produced gas was collected at the outlet of the gas washing bottle to obtain a treated gas (d-3). Table 1 shows results of measurements of the concentrations of fluorine gas (F₂) and oxygen difluoride (OF₂) in the treated gas (d-3). In the treated gas (d-3), neither fluorine gas nor oxygen difluoride was detected.

### [Comparative Example 1]

In a gas washing bottle (capacity: 500 ml) made of Teflon (registered trademark) was placed 250 ml of pure water. While stirring with a stirrer, the exhaust gas including 50% by volume of fluorine gas (F₂) used in Example 1 was introduced without dilution from a gas introducing pipe at a flow rate of 90 ml/min, and bubbled to perform a water absorption step. The produced gas was collected at the outlet of the gas washing bottle, and used as a treated gas (c'-4) to measure the concentrations of fluorine (F₂) and oxygen difluoride (OF₂). Table 1 shows measurement results. The results showed that, in the treated gas (c'-4), the detected fluorine gas concentration was very small, 10 ppm by volume or less, whereas the detected oxygen difluoride concentration was 4.2% by volume (42,000 ppm by volume).

### [Comparative Example 2]

The water absorption step was performed in the same manner as Comparative Example 1 to obtain the treated gas (c'-4).

Next, the chemical solution absorption step was performed in the same manner as Example 2 except for using the treated gas (c'-4) in place of the treated gas (c-1), and the produced gas was collected at the outlet of the gas washing bottle to obtain a treated gas (d'-4). Table 1 shows results of measurements of the concentrations of fluorine gas (F₂) and oxygen difluoride (OF₂) in the treated gas (d'-4). In the treated gas (d'-4), the fluorine gas concentration was very small, 10 ppm by volume or less, whereas the oxygen difluoride concentration was 2,000 ppm by volume.

**Table 1**

| | F₂ concentration when introduced into water absorption step (% by volume) | Absorbing liquid in chemical solution absorption step | Treated gas | F₂ concentration in treated gas (ppm by volume) | OF₂ concentration in treated gas (ppm by volume) |
|---|---|---|---|---|---|
| EX. 1 | 20 | None | c-1 | <1 | 80 |
| EX. 2 | 20 | 3%Na₂SO₃ | d-1 | <1 | <0.5 |
| EX. 3 | 5 | None | c-2 | <1 | 6 |
| EX. 4 | 5 | 3%Na₂SO₃ | d-2 | <1 | <0.5 |
| EX. 5 | 1 | None | c-3 | <1 | 2 |
| EX. 6 | 1 | 3%Na₂SO₃ | d-3 | <1 | <0.5 |
| COMP-EX. 1 | 50 | None | c'-4 | <10 | 42,000 |
| COMP-EX. 2 | 50 | 3%Na₂SO₃ | d'-4 | <10 | 2,000 |

### Industrial Applicability

The method for treating an exhaust gas according to the present invention is suitable as a method for treating a fluorine element-containing exhaust gas produced in a process using a fluorine-based gas as an etching or cleaning gas, a process for manufacturing a fluorine-based gas, or the like to obtain a treated gas that substantially does not include fluorine-based gases.

### Reference Signs List

1: Exhaust gas introducing pipe 1
2: First absorption column
3: Filling layer 1
4: Water supplying pipe
5: HF aqueous solution discharging pipe
6: Circulating liquid tank 1
7: Circulation pump 1
8: Shower nozzle 1
9: Exhaust gas introducing pipe 2
10: Second absorption column
11: Filling layer 2
12: Circulating liquid tank 2
13: Circulation pump 2
14: Shower nozzle 2
15: Treated gas discharging pipe

## Claims

1. A method for treating a fluorine element-containing exhaust gas, **characterized by** comprising:
a dilution step of diluting a fluorine element-containing exhaust gas (a) with an inert gas so as to have a fluorine gas concentration of 25% by volume or less to prepare a diluted gas (b); and
a water absorption step of contacting the diluted gas (b) with water to obtain a treated gas (c).

2. The method for treating a fluorine element-containing exhaust gas according to claim 1, wherein the inert gas is air or nitrogen gas.

3. The method for treating a fluorine element-containing exhaust gas according to claim 1 or 2, wherein the exhaust gas (a) includes fluorine gas and/or hydrogen fluoride.

4. The method for treating a fluorine element-containing exhaust gas according to any of claims 1 to 3, wherein an oxygen difluoride concentration in the treated gas (c) is 100 ppm by volume or less.

5. The method for treating a fluorine element-containing exhaust gas according to any of claims 1 to 4, further comprising a chemical solution absorption step of contacting the treated gas (c) with an aqueous solution including a reducing agent to obtain a treated gas (d).

6. The method for treating a fluorine element-containing exhaust gas according to claim 5, wherein the reducing agent included in the aqueous solution including a reducing agent is a sulfur-based reducing agent.

7. The method for treating a fluorine element-containing exhaust gas according to claim 6, wherein the sulfur-based reducing agent is sulfite or thiosulfate.

8. The method for treating a fluorine element-containing exhaust gas according to any of claims 5 to 7, wherein an oxygen difluoride concentration in the treated gas (d) is 1 ppm by volume or less.
